# EUROPEAN PATENT SPECIFICATION

(11) **EP 3 012 192 B1**
(45) Date of publication and mention of the grant of the patent: **01.06.2022**
(21) Application number: 14190338.5
(22) Date of filing: 24.10.2014
(51) Int. Cl.: B64D 45/00

(54) **METHOD FOR DETERMINING A STATE OF A COMPONENT IN A HIGH LIFT SYSTEM OF AN AIRCRAFT, HIGH LIFT SYSTEM OF AN AIRCRAFT AND AIRCRAFT HAVING SUCH A HIGH LIFT SYSTEM**
VERFAHREN ZUR ERMITTLUNG EINES ZUSTANDS EINER KOMPONENTE IN EINEM HOCHAUFTRIEBSSYSTEM EINES FLUGZEUGS, HOCHAUFTRIEBSSYSTEM EINES FLUGZEUGS UND FLUGZEUG MIT SOLCH EINEM HOCHAUFTRIEBSSYSTEM
PROCÉDÉ POUR DÉTERMINER UN ÉTAT D'UN COMPOSANT DANS UN SYSTÈME HYPERSUSTENTATEUR D'UN AVION, SYSTÈME HYPERSUSTENTATEUR ET AÉRONEF COMPRENANT CE DERNIER

(43) Date of publication of application: 27.04.2016
(73) Proprietor: Airbus Operations GmbH, 21129 Hamburg (DE)
(72) Inventor: Neb, Eugen, 21129 Hamburg (DE); Van Bruggen, Jan-Arend, 21129 Hamburg (DE); Brady, Michael, 21129 Hamburg (DE); Wyrembek, Jörg, 21129 Hamburg (DE); Criou, Olivier, 21129 Hamburg (DE); Haserodt, Jan, 21129 Hamburg (DE); Heintjes, Mark, 21129 Hamburg (DE)
(74) Representative: LKGLOBAL Lorenz & Kopf PartG mbB Patentanwälte

(56) References cited:
- EP-A1- 2 783 988
- EP-A2- 0 922 633
- WO-A1-2005/047108
- DE-A1- 10 353 672
- DE-A1-102010 047 512
- US-A1- 2010 100 355

## Description

### TECHNICAL FIELD

The invention relates to a method for determining a state of a component in a high lift system of an aircraft, a high lift system of an aircraft as well as an aircraft having such a high lift system.

### BACKGROUND OF THE INVENTION

A high lift system of an aircraft serves the purpose of lift and drag management. A high lift system is often composed of a leading edge slat system and a trailing edge flap system. Many flap systems in civil and military aircraft are equipped with a central drive unit, which is also known as power control unit (PCU), which drives a transmission shaft train and local mechanical actuator devices, the so-called drive stations, on corresponding flap support stations of the movable flaps. The high lift settings are selectable by a cockpit crew through a flaps lever, through which a flap angle is selectable.

Such a transmission system provides a load path from the central drive unit to all actuator outputs, leading to a symmetrical deployment of all flap devices. Flap kinematics transform a rotary motion driven by the drive station into a required surface movement.

A high lift flap system is often controlled and monitored by control computers, the so-called flap channel of the slat flap control computers (SFCC). System drive commands primarily originate from the flaps lever input. The surfaces will be driven to predetermined positions (flap settings) that are laid down in the software of the respective control computer. For achieving a high accuracy in driving the flap devices to the predetermined positions, flap drive system positions are continuously fed back/monitored by a feedback position pick-off unit (FPPU) attached to the drive unit and fitted with an internal gearbox to dedicate an equivalent system angle.

Further sensors are dedicated to system failure monitoring such as station position pick-off units (SPPU), which are connected to individual drive stations to dedicate an equivalent angle for each station for system monitoring purposes.

Flap attachment monitoring is useful for detecting a potentially abnormal state of a driven flap. Commonly, each flap is driven by two stations and the position of these two stations are monitored by two independent station position pick-off units. The above-mentioned control computer may be provided with a flap skew monitoring for detecting an abnormal flap twist (skew). In case a predetermined skew threshold is exceeded, the control computer may interrupt the operation of the flap system.

From WO 2005/047108 A1 a method and an apparatus for load limiting in a high lift system of an aircraft is known.

### SUMMARY OF THE INVENTION

With an increasing stiffness of flaps or other aerodynamic surfaces driven in a high lift system, the above-mentioned predetermined skew threshold needs to be reduced, as skew effects arising from attachment disconnections are decreased. At the same time, the accuracy requirements of associated sensors needs to be increased in order to maintain a certain monitoring robustness. However, increasing the sensor accuracy results in increased development and manufacturing costs.

It is therefore an object of the invention to propose a method for determining the state of a component in a high lift system of an aircraft with a high robustness, reliability and accuracy, which method is conductable under use of sensors without increased accuracy.

The object is met by a method comprising the features of independent claim 1 and a high lift system comprising the features of independent claim 5. Advantageous embodiments and further improvements may be gathered from the sub-claims and the following description.

Method for determining a state of a component in a high lift system of an aircraft, the high lift system comprising a central power control unit for providing rotational power by means of a transmission shaft; and drive stations coupled with the power control unit and movable high lift surfaces; the method comprising the steps of acquiring in an extended position in flight at least one first position of a first position pick-off unit coupled with the component, which is mechanically coupled with one of the high lift surfaces, and which is coupled with one of the drive stations, wherein the first position pick-off unit is integrated into a drive station, wherein the central power control unit drives the transmission shaft, which in turn drives the drive stations coupled with the high lift surfaces; acquiring in flight a second position of a second position pick-off unit arranged in or at the central power control unit in the extended position; determining a deviation between a first measure based on the first position and a corresponding second measure based on the second position in the extended position; determining, whether the deviation exceeds a predetermined threshold; and generating a signal indicating an abnormal state of the component in case the deviation exceeds the predetermined threshold.

The method according to the invention provides the ability to determine a state of a component in the previously described high lift system. Exemplarily, the state of the component may be differentiated between "fully operative" or "faulty". This means, that the method according to the invention is able to at least provide a feedback whether the respective component may be operated without causing mechanical damages to the component itself or to associated components, such as drive stations or the such. The signal generated by the method may be used for interrupting the operation of at least a part of the high lift system that includes the faulty component.

The component may be a transmission system or coupled to a high lift surface or coupled with the drive station, such as a lever or a chain of levers, wherein in the context of the high lift system mentioned above a high lift surface is driven by two drive stations, which are arranged at a distance to each other. Preferably, the high lift surface comprises two edges that each comprise a section mechanically coupled with a single drive station each.

The positions acquired by the first position pick-off unit and the second position pick-off unit may preferably be rotational positions under use of rotational sensors. However, also distance information may be acquired through the use of different sensors.

A core of the invention lies in acquiring a position by a first (station) position pick-off unit in an extended position and pairing it with the position acquired by a second position pick-off unit attached to the power control unit located at an opposite end of a kinematical chain to the high lift surface of interest. In an operative state, the second position pick-off unit delivers a value which corresponds to a commanded extension position. In case of a disconnection of a drive station of the respective high lift surface, the position of the high lift surface differs at least in one drive station. If the difference between the commanded position and the actual position of the high lift surface exceeds a threshold it is concluded that a failure occurred. Hence, the measured positions are clearly larger than a difference between positions of two drive stations at a high lift surface in a common skew measurement operation. Due to the resulting increase in magnitude, the required sensor accuracy may be lower than required for simply measuring the twist alone. Preferably, acquiring the first position and the second position are done concurrently. However, it may also be conducted subsequently.

In this regard, the measure based on the first or the second position may be realized by different parameters. For example, a position delivered by the first position pick-off unit may be measured by the number of rotations, which have been accomplished by the first position pick-off unit. It may be transformed into an extension distance, into an extension fraction or into a position difference based on the position of the first drive station and another component. The measure based on the second position may be realized by the same parameter as the measure based on the first position. Hence, extension distances or a number of rotations are to be compared. It goes without saying that any gear ratio between the power control unit and the respective drive station has to be considered in this case, such that the measures based on the first and the second position are comparable.

For improving the accuracy of the method according to the invention, different filters and algorithms may be used for the measurements, such as searching for a maximum, minimum or mean value during or within a certain time. Still further, an electronic calibration may be introduced in addition. During the calibration the control unit determines the characteristics of the system by measuring each station position pick-off unit at given flap positions. Such a calibration run may be performed automatically once on ground or in flight. Stored values may be used during the above method and eliminates system build tolerances (systematic errors).

Comparing the method according to the invention with common methods reveals at least the following advantages. Using the proposed method enables the use of standard sensor accuracies, which leads to economization of development costs, time and risk when introducing new sensor technology. Further, the method according to the invention leads to a significant improvement of monitor robustness avoiding nuisance monitor tripping. A disconnect failure may also be dedicated to a specific station without additional checks and in case of at least one embodiment, one SPPU sensor is sufficient for detecting disconnects at a specific station.

To sum up, the method according to the invention provides an excellent way in monitoring a component in a high lift system of an aircraft without requiring excessively accurate sensors. The threshold could be determined as a fixed value or as a function of speed, flight phase, altitude, flap configuration or spoiler position.

The first position pick-off unit is integrated into a drive station. This means, that the first position pick-off unit may be directly coupled with a shaft, a nut, a joint or any other rotating component driven by the transmission shaft.

In an advantageous embodiment, the measure based on the first position is proportional to the first position and the measure based on the second position is proportional to the second position. Hence, the measured positions are directly fed back into comparing the states during the flight. The state of the relevant component may be determined based on measuring the positions of only one station of the high lift surface alone.

In a further embodiment, the measure based on the second position is multiplied with a correction factor depending on a gear ratio between the power control unit and the actuator drive station. The measured first and second positions may be realized by rotational positions. As explained above, the PCU drives the transmission shaft, which in turn drives drive stations coupled with high lift surfaces, wherein a kinematical chain between the PCU and a driven element at a drive station comprises a certain gear ratio, i.e. the rotational speed of the driven element may exemplarily be lower than the rotational speed of the PCU due to the gear ratio. The correction factor may be equal to a reciprocal of the gear ratio, in order to directly compare the numbers of rotations of a PCU shaft, multiplied with the correction factor, with the number of rotations of a driven element in the respective drive station.

It may also be possible to transform both the first position and the second position into a value ranging from 0 to 1, indicating the fraction of a maximum extension, wherein 0 resembles a neutral, retracted position of the respective high lift surface and 1 resembles its maximum position. These measures may easily be compared.

In another exemplary embodiment, determining the deviation comprises calculating the difference between the measure based on the first position and the measure based on the second position. By subtracting these measures, a numeral value results, which may easily be compared with a threshold in the form of a numeral value, too. In case the absolute value determined in the subtraction exceeds the absolute value of the threshold, the above mentioned signal is to be created.

The invention further relates to a high lift system for an aircraft, comprising a central power control unit for providing rotational power by means of a transmission shaft, at least one high lift surface, each coupled with at least two actuator drive stations, which actuator drive stations being coupled with the power control unit, at least one control unit coupled with the central power control unit, and a first position pick-off unit mechanically coupled with one of the at least two actuator drive stations. The control unit is adapted for acquiring in an extended position in flight at least one first position of a first position pick-off unit coupled with the component, which is mechanically coupled with one of the high lift surfaces, and which is coupled with one of the drive stations, wherein the first position pick-off unit is integrated into a drive station, wherein the central power control unit drives the transmission shaft, which in turn drives the drive stations coupled with the high lift surfaces; acquiring in flight a second position of a second position pick-off unit arranged in or at the central power control unit in the extended position; determining a deviation between a first measure based on the first position and a corresponding second measure based on the second position in the extended position; determining, whether the deviation exceeds a predetermined threshold; and generating a signal indicating an abnormal state of the component in case the deviation exceeds the predetermined threshold.

The control unit may be the slat flap control computer or a separate control unit.

Still further, the invention relates to an aircraft having such a high lift system.

### BRIEF DESCRIPTION OF THE DRAWINGS

Further characteristics, advantages and application options of the present invention are disclosed in the following description of the exemplary embodiments in the figures. Furthermore, identical or similar components in the figures have the same reference characters.
Fig. 1 shows a high lift flap system capable of conducting the method according to the invention in a schematic, block-oriented view.
Figs. 2a and 2b show a single high lift flap surface and a measure at a single drive station and the PCU are acquired and compared.
Fig 3 shows a dependency between determined deviation, threshold and flight speed.

### DETAILED DESCRIPTION OF EXEMPLARY EMBODIMENTS

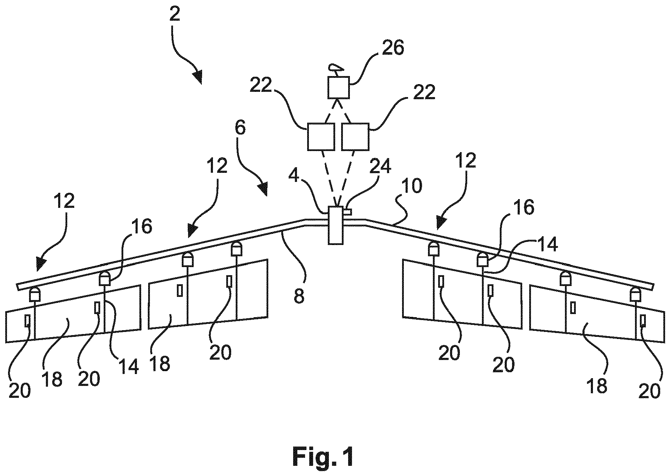

In Fig. 1, a general setup of a high lift system 2 is shown. Here, a power control unit 4 is coupled with a transmission shaft system 6 comprising a left transmission shaft 8 and a right transmission shaft 10. These are coupled with drive stations 12 distributed along the transmission shafts 8 and 10 along a trailing edge section of a wing, which is not depicted in Fig. 1.

Each drive station 12 exemplarily comprises a spindle 14 as well as a nut 16, which is moved along the spindle 14 through the spindle rotation. Each of a plurality of high lift surfaces, which are shown as flap 18, is exemplarily coupled with two drive stations 12 and comprises two station position pick-off units 20. Both drive stations 12 are arranged at a distance to each other, exemplarily at two opposite lateral flap ends. Usually, two redundant flap control computers 22, which both may also be referred to as a control unit in the light of the invention, which flap control computers 22 are coupled with the PCU 4 and the station position pick-off units 20.

Furthermore, a feedback position pick-off unit 24 is coupled to the flap control computers 22 and allows the determination of an actual rotational position of the transmission shaft system 6, leading to the ability to determine the position of the flaps 18, which depends on the rotational position of the transmission shaft system 6. A flaps lever 26 provides an input into the flap control computers 22, which then drive the power control unit 4 such that the actually determined rotational position of the transmission shaft system 6 equals the commanded angle.

The feedback position pick-off unit 24 may comprise an internal gear, which is not depicted in Fig. 1. The same applies to the station position pick-off units 20. Also, the kinematic chain between PCU 4 and a drive station 12 may comprise a certain gear ratio, which may be considered by the flap control computers 22, when a position acquired by a station position pick-off unit 20 as a first position pick-off unit and the feedback position pick-off unit 24 as a second position pick-off unit are compared.

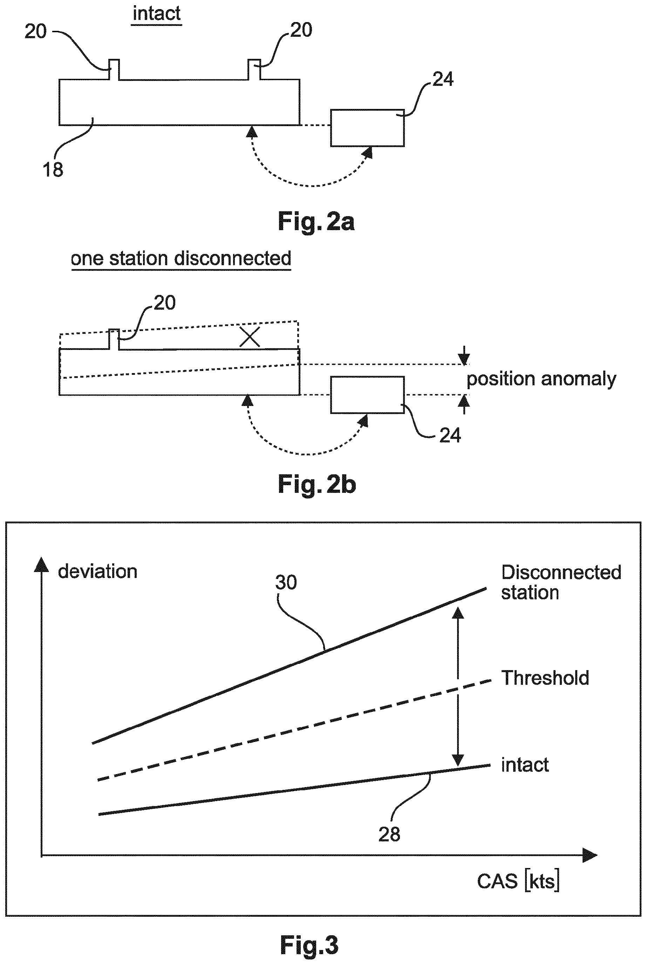

Fig. 2a shows a flap having two intact drive stations 20. The difference between an acquired measure based on a rotational position of a station position pick-off unit 20 and an associated rotational position of the feedback position pick-off unit 24 is marginal, such that a predetermined threshold is clearly not exceeded.

However, in Fig. 2b, the right drive station 12 has a failure, while the left drive station 12 is intact, such that the associated right part of the flap 18 is not extended by the second drive station 12. Hence, while the first drive station 20 drives the associated left part of the flap 18, a skew arises.

The rotational position acquired by at least one of station position pick-off units 20, in particular the position pick-off unit 20 coupled with the disconnected drive station 20 differs from the position it should have assumed due to the rotation of the PCU 4. Hence, by subtracting the position of the particular drive station 20 from the desired position, which is determined by the rotation of the PCU 4 measured by the feedback position pick-off unit 24, a deviation may be detected. In case this deviation exceeds the threshold, a signal is generated indicating an abnormal state.

Finally, Fig. 3 demonstrates that a predetermined threshold may be selected depending on the speed of the aircraft. As the air loads rise with the speed, a larger tolerance should be allowed for a determination of the deviation of both measures. In the graph shown in Fig. 3 the possible deviation 28 for an intact system may increase with the computed air speed (CAS), e.g. proportionally. Hence, also the determinable deviation 30 of a defect system may increase accordingly. Consequently, a threshold 32 may be selected between both curves, which may result in a proportional dependency of the threshold with the air speed.

In addition, it should be pointed out that "comprising" does not exclude other elements or steps, and "a" or "an" does not exclude a plural number. Furthermore, it should be pointed out that characteristics or steps which have been described with reference to one of the above exemplary embodiments can also be used in combination with other characteristics or steps of other exemplary embodiments described above. Reference characters in the claims are not to be interpreted as limitations.

## Claims

1. Method for determining a state of a component in a high lift system (2) of an aircraft, the high lift system (2) comprising a central power control unit (4) for providing rotational power by means of a transmission shaft (8, 10); and drive stations (12) coupled with the power control unit (4) and movable high lift surfaces (18); the method comprising the steps of:
- acquiring in an extended position in flight at least one first position of a first position pick-off unit (20) coupled with the component, which is mechanically coupled with one of the high lift surfaces (18), and which is coupled with one of the drive stations (12), wherein the first position pick-off unit (20) is integrated into a drive station (12), wherein the central power control unit (4) drives the transmission shaft (8, 10), which in turn drives the drive stations (20) coupled with the high lift surfaces (18);
- acquiring in flight a second position of a second position pick-off unit (20) arranged in or at the central power control (4) unit in the extended position,
- determining a deviation between a first measure based on the first position and a corresponding second measure based on the second position in the extended position,
- determining, whether the deviation exceeds a predetermined threshold and
- generating a signal indicating an abnormal state of the component in case the deviation exceeds the predetermined threshold.

2. Method of claim 1,
wherein the measure based on the first position is proportional to the first position, and
wherein the measure based on the second position is proportional to the second position.

3. Method of claim 1 or 2,
wherein the measure based on the second position is multiplied with a correction factor depending on a gear ratio between the power control unit (4) and the drive station (12).

4. Method of any of the previous claims,
wherein determining the deviation comprises calculating the difference between the first measure and the second measure.

5. High lift system (2) for an aircraft, comprising:
- a central power control unit (4) for providing rotational power by means of a transmission shaft (8, 10),
- at least one high lift surface (18), each coupled with at least two drive stations (12), which drive stations (12) being coupled with the power control unit (4),
- at least one control unit (22) coupled with the central power control unit (22),
- a first position pick-off unit (20) mechanically coupled with one of the at least two drive stations (12), and
- a second position pick-off unit (20) arranged in or at and directly coupled with the central power control unit (4),
wherein the first position pick-off unit (20) is integrated into a drive station (12), wherein the central power control unit (4) drives the transmission shaft (8, 10), which in turn drives the drive stations (20) coupled with the high lift surfaces (18);
wherein the control unit (22) is adapted for acquiring in an extended position in flight at least one first position of a first position pick-off unit (20) coupled with a component, which is mechanically coupled with one of the high lift surfaces (18), and which is coupled with one of the drive stations (12); acquiring in flight a second position of a second position pick-off unit (20) arranged in or at the central power control (4) unit in the extended position; determining a deviation between a first measure based on the first position and a corresponding second measure based on the second position in the extended position; determining, whether the deviation exceeds a predetermined threshold; and generating a signal indicating an abnormal state of the component in case the deviation exceeds the predetermined threshold.

6. Aircraft, comprising a wing and a high lift system (2) of claim 5.

## Patentansprüche

1. Verfahren zum Bestimmen eines Zustandes einer Komponente in einem Hochauftriebssystem (2) eines Flugzeugs, wobei das Hochauftriebssystem (2) eine zentrale Energiesteuereinheit (4) zum Bereitstellen von Rotationsenergie mittels einer Übertragungswelle (8, 10) und Antriebsstationen (12) umfasst, die mit der Energiesteuereinheit (4) und beweglichen Hochauftriebsflächen (18) gekoppelt sind, wobei das Verfahren die folgenden Schritte umfasst:
- Erfassen mindestens einer ersten Position einer ersten Positionsaufnahmeeinheit (20), die mit der Komponente gekoppelt ist, die mechanisch mit einer der Hochauftriebsflächen (18) gekoppelt ist und die mit einer der Antriebsstationen (12) gekoppelt ist, in einer ausgefahrenen Position während des Fluges, wobei die erste Positionsaufnahmeeinheit (20) in eine Antriebsstation (12) integriert ist, wobei die zentrale Energiesteuereinheit (4) die Übertragungswelle (8, 10) antreibt, die wiederum die Antriebsstationen (20) antreibt, die mit den Hochauftriebsflächen (18) gekoppelt sind,
- Erfassen einer zweiten Position einer zweiten Positionsaufnahmeeinheit (20), die in oder an der zentralen Energiesteuereinheit (4) angeordnet ist, während des Fluges in der ausgefahrenen Position,
- Bestimmen einer Abweichung zwischen einer ersten Messung, die auf der ersten Position basiert, und einer entsprechenden zweiten Messung, die auf der zweiten Position basiert, in der ausgefahrenen Position,
- Bestimmen, ob die Abweichung einen festgelegten Schwellenwert übersteigt, und
- Erzeugen eines Signals, das einen anomalen Zustand der Komponente angibt, wenn die Abweichung den festgelegten Schwellenwert übersteigt.

2. Verfahren nach Anspruch 1, wobei die Messung, die auf der ersten Position basiert, proportional zur ersten Position ist und die Messung, die auf der zweiten Position basiert, proportional zur zweiten Position ist.

3. Verfahren nach Anspruch 1 oder 2, wobei die Messung, die auf der zweiten Position basiert, mit einem Korrekturfaktor multipliziert wird, der von einem Übersetzungsverhältnis zwischen der Energiesteuereinheit (4) und der Antriebsstation (12) abhängt.

4. Verfahren nach einem der vorhergehenden Ansprüche, wobei das Bestimmen der Abweichung das Berechnen der Differenz zwischen der Messung, die auf der ersten Position basiert, und der Messung, die auf der zweiten Position basiert, umfasst.

5. Hochauftriebssystem (2) für ein Flugzeug, Folgendes umfassend:
- eine zentrale Energiesteuereinheit (4) zum Bereitstellen von Rotationsenergie mittels einer Übertragungswelle (8, 10),
- mindestens eine Hochauftriebsfläche (18), die jeweils mit mindestens zwei Antriebsstationen (12) gekoppelt ist, wobei die Antriebsstationen (12) mit der Energiesteuereinheit (4) gekoppelt sind,
- mindestens eine Steuereinheit (22), die mit der zentralen Energiesteuereinheit (22) gekoppelt ist,
- eine erste Positionsaufnahmeeinheit (20), die mechanisch mit einer der mindestens zwei Antriebsstationen (12) gekoppelt ist, und
- eine zweite Positionsaufnahmeeinheit (20), die in oder an der zentralen Energiesteuereinheit (4) angeordnet oder direkt mit dieser gekoppelt ist,
wobei die erste Positionsaufnahmeeinheit (20) in eine Antriebsstation (12) integriert ist, wobei die zentrale Energiesteuereinheit (4) die Übertragungswelle (8, 10) antreibt, die wiederum die Antriebsstationen (20) antreibt, welche mit den Hochauftriebsflächen (18) gekoppelt sind,
wobei die Steuereinheit (22) dafür eingerichtet ist, während des Fluges in einer ausgefahrenen Position mindestens eine erste Position einer ersten Positionsaufnahmeeinheit (20) zu erfassen, die mit einer Komponente gekoppelt ist, die mechanisch mit einer der Hochauftriebsflächen (18) gekoppelt ist, und die mit einer der Antriebsstationen (12) gekoppelt ist, während des Fluges in der ausgefahrenen Position eine zweite Position einer zweiten Positionsaufnahmeeinheit (20) zu erfassen, die in oder an der zentralen Energiesteuereinheit (4) angeordnet ist, in der ausgefahrenen Position eine Abweichung zwischen einer ersten Messung, die auf der ersten Position basiert, und einer entsprechenden zweiten Messung, die auf der zweiten Position basiert, zu bestimmen, zu bestimmen, ob die Abweichung einen festgelegten Schwellenwert übersteigt, und ein Signal zu erzeugen, das einen anormalen Zustand der Komponente angibt, wenn die Abweichung den festgelegten Schwellenwert übersteigt.

6. Flugzeug, einen Flügel und ein Hochauftriebssystem (2) nach Anspruch 5 umfassend.

## Revendications

1. Procédé de détermination d'un état d'un composant dans un système hypersustentateur (2) d'un aéronef, le système hypersustentateur (2) comprenant une unité centrale de commande de puissance (4) destinée à fournir une puissance de rotation au moyen d'un arbre de transmission (8, 10) ; et des postes d'entraînement (12) accouplés à l'unité de commande de puissance (4) et à des surfaces hypersustentatrices mobiles (18) ; le procédé comprenant les étapes suivantes :
- acquisition, dans une position sortie en vol, d'au moins une première position d'une première unité de détection de position (20) accouplée au composant, qui est mécaniquement accouplée à l'une des surfaces hypersustentatrices (18) et qui est accouplée à l'un des postes d'entraînement (12), la première unité de détection de position (20) étant intégrée à un poste d'entraînement (12), l'unité centrale de commande de puissance (4) entraînant l'arbre de transmission (8, 10), lequel entraîne à son tour les postes d'entraînement (20) accouplés aux surfaces hypersustentatrices (18) ;
- acquisition, en vol, d'une deuxième position d'une deuxième unité de détection de position (20) agencée dans ou au niveau de l'unité centrale de commande de puissance (4) dans la position sortie,
- détermination d'un écart entre une première mesure basée sur la première position et une deuxième mesure correspondante basée sur la deuxième position dans la position sortie,
- détermination si l'écart dépasse ou non un seuil prédéterminé et
- génération d'un signal indiquant un état anormal du composant dans le cas où l'écart dépasse le seuil prédéterminé.

2. Procédé selon la revendication 1,
dans lequel la mesure basée sur la première position est proportionnelle à la première position, et
dans lequel la mesure basée sur la deuxième position est proportionnelle à la deuxième position.

3. Procédé selon la revendication 1 ou 2,
dans lequel la mesure basée sur la deuxième position est multipliée par un facteur de correction fonction d'un rapport de transmission entre l'unité de commande de puissance (4) et le poste d'entraînement (12).

4. Procédé selon l'une quelconque des revendications précédentes,
dans lequel la détermination de l'écart comprend le calcul de la différence entre la première mesure et la deuxième mesure.

5. Système hypersustentateur (2) pour un aéronef, comprenant :
- une unité centrale de commande de puissance (4) destinée à fournir une puissance de rotation au moyen d'un arbre de transmission (8, 10),
- au moins une surface hypersustentatrice (18), chacune accouplée à au moins deux postes d'entraînement (12), lesquels postes d'entraînement (12) sont accouplés à l'unité de commande de puissance (4),
- au moins une unité de commande (22) accouplée à l'unité centrale de commande de puissance (22),
- une première unité de détection de position (20) mécaniquement accouplée à l'un des au moins deux postes d'entraînement (12), et
- une deuxième unité de détection de position (20) agencée dans, ou au niveau de, et directement accouplée à l'unité centrale de commande de puissance (4),
la première unité de détection de position (20) étant intégrée à un poste d'entraînement (12), l'unité centrale de commande de puissance (4) entraînant l'arbre de transmission (8, 10), lequel entraîne à son tour les postes d'entraînement (20) accouplés aux surfaces hypersustentatrices (18) ;
l'unité de commande (22) étant adaptée à acquérir, dans une position sortie en vol, au moins une première position d'une première unité de détection de position (20) accouplée à un composant, qui est mécaniquement accouplée à l'une des surfaces hypersustentatrices (18) et qui est accouplée à l'un des postes d'entraînement (12) ; acquérir, en vol, une deuxième position d'une deuxième unité de détection de position (20) agencée dans ou au niveau de l'unité centrale de commande de puissance (4) dans la position sortie ; déterminer un écart entre une première mesure basée sur la première position et une deuxième mesure correspondante basée sur la deuxième position dans la position sortie ; déterminer si l'écart dépasse ou non un seuil prédéterminé ; et générer un signal indiquant un état anormal du composant dans le cas où l'écart dépasse le seuil prédéterminé.

6. Aéronef, comprenant une aile et un système hypersustentateur (2) selon la revendication 5.
